# EUROPEAN PATENT APPLICATION

(11) **EP 4 730 757 A1**
(43) Date of publication of application: **22.04.2026**
(21) Application number: 25207151.9
(22) Date of filing: 07.10.2025
(51) Int. Cl.: H04N 1/00, G06F 3/12, G03G 15/00

(54) **IMAGE FORMING APPARATUS, CONTROL METHOD OF IMAGE FORMING APPARATUS, AND PROGRAM**

(30) Priority: 21.10.2024 JP 2024185027
(71) Applicant: Canon Kabushiki Kaisha, Tokyo 146-8501 (JP)
(72) Inventor: SUZUKI, Takeshi, Tokyo 146-8501 (JP)
(74) Representative: Canon Europe Limited

(57) **Abstract**

An image forming apparatus includes a first setting unit configured to set, in a predetermined state in which reception of data via a local area network is not performed, a first setting related to a function of automatically turning off a power source of the image forming apparatus, and a second setting unit configured to set, in a state in which data is received via a local area network, a second setting related to the function. Convenience of a user is to be improved.

## Description

### TECHNICAL FIELD

The present disclosure relates to an image forming apparatus, a control method of the image forming apparatus, and a program.

### BACKGROUND

Up to now, products have been proposed which are provided with a mechanism of automatically turning off a power source of a device when the device is not operated to reduce power consumption of electrical appliances, and energy saving is also an important function from a perspective of contribution to an issue of global warming. In addition, in recent years, each country has implemented laws and regulations related to energy saving, and such a situation is developed that electrical appliances are increasingly required to comply with the laws and regulations of a region where the electrical appliances are being sold.

Japanese Patent Laid-Open No. 2004-230850 describes a technique of switching a time period until a power source is turned off since a printer is put into a non-operative state depending on a power source type (AC adopter connection or battery connection).

One of the laws and regulations related to energy saving is a regulation stating that a power source is to be automatically turned off within a specified time in a standalone state. However, in an electronic device such as a printer in related art, only one automatic power source off setting is provided, and it is difficult to conduct the automatic power source off setting depending on a state of the printer. Therefore, an issue occurs that the following user demand is not met, and usability deteriorates.

According to a disclosure described in Japanese Patent Laid-Open No. 2004-230850, only the time period until the power source is turned off since the printer is put into the non-operative state can be switched depending on the power source type, and the above-described issue is not dealt with.

### SUMMARY

In a case where a printer is in a network connection state, to check a state of the printer from a remote place, there is also a demand to disable an automatic power source off setting. On the other hand, in a case where the printer is not connected to a network (case of a standalone state), since it is sufficient if a power source is turned on only when a user comes close to and uses the printer, a demand also exists that a time period until the power source is automatically turned off is set to be short.

The present disclosure has been made to address the above-described issue and provides an image forming apparatus which can improve convenience of a user, a control method of the image forming apparatus, and a program.

The present disclosure in its first aspect provides an image forming apparatus as specified in claim 1. Optional features are specified in claims 2 to 13.

The present disclosure in its second aspect provides a control method as specified in claim 14.

The present disclosure in its third aspect provides a program as specified in claim 15.

Features of the present disclosure will become apparent from the following description of embodiments with reference to the attached drawings. The following description of embodiments is described by way of example.

### BRIEF DESCRIPTION OF THE DRAWINGS

Fig. 1 is a functional block diagram illustrating a schematic configuration of an MFP in a first embodiment.
Fig. 2 illustrates a setting screen for conducting an automatic power source off setting in the first embodiment.
Fig. 3 is a flowchart illustrating a flow of an automatic power source off operation of the MFP in the first embodiment.
Fig. 4 is a flowchart of determining whether the MFP is in a standalone state or a non-standalone state in the first embodiment.
Fig. 5 illustrates a setting screen for conducting the automatic power source off setting in a second embodiment.
Fig. 6 is a flowchart illustrating a flow of the automatic power source off operation of the MFP in the second embodiment.
Fig. 7 illustrates a setting screen for conducting the automatic power source off setting in other embodiments (graying out an invalid setting).
Fig. 8 illustrates a setting screen for conducting the automatic power source off setting in other embodiments (adding information indicating a valid setting).

### DESCRIPTION OF THE EMBODIMENTS

Hereinafter, the present disclosure will be described in detail with reference to the drawings. It is noted that the following embodiments are not intended to limit the present disclosure according to the scope of claims, and also not all combinations of features described in the present embodiments are necessarily essential to solutions of the present disclosure. In addition, in the accompanying drawings, the same reference sign is allocated to the same or similar component, and a duplicated explanation will not be repeated. Each of the embodiments of the present invention described below can be implemented solely or as a combination of a plurality of the embodiments or features thereof where necessary or where the combination of elements or features from individual embodiments in a single embodiment is beneficial.

### First Embodiment

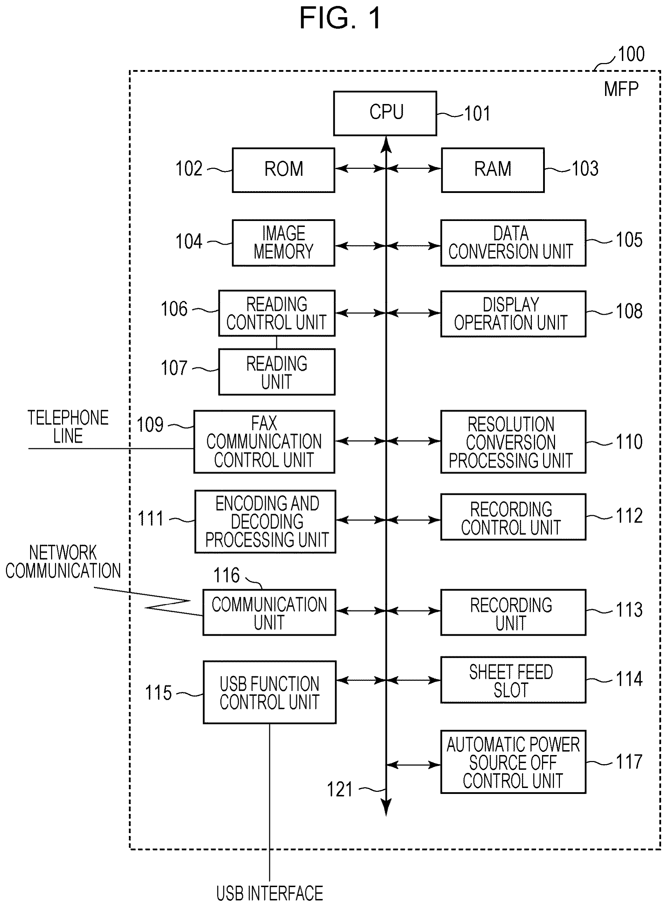

Fig. 1 is a block diagram illustrating a schematic configuration of a multi functional peripheral (MFP) 100 according to a mode as an electronic device of the present disclosure. In the MFP 100, a central processing unit (CPU) 101 is a system control unit and controls an entirety of the MFP 100. A read only memory (ROM) 102 stores fixed data such as a control program to be executed by the CPU 101, a data table, and an embedded operating system (OS) program. According to the present embodiment, with each control program stored in the ROM 102, under management by the embedded OS stored in the ROM 102, software execution control such as scheduling, task switch, or interrupt handling is performed. A random access memory (RAM) 103 is constituted by a static random access memory (SRAM) or the like which uses a backup power source, and holds data by a primary battery for data backup which is not illustrated in the drawing. The RAM 103 stores a program control variable and the like the data of which is not to be erased. In addition, a memory area is also provided which stores setting values registered by a user, management data of the MFP 100, and the like. For example, the setting values registered by the user include a network setting, and a memory area is provided which stores a valid/invalid status of each of a wired local area network (LAN), Wi-Fi, and wireless direct. These setting values are manually set by the user using a display operation unit 108 which will be described below. From a top screen that is not illustrated in the drawing which is to be displayed on the display operation unit 108 after the power source of the MFP 100 is turned on, by sequentially selecting menus such as a setting menu, a main unit setting, and a LAN setting, a LAN setting screen is displayed, and these settings can be conducted.

In addition, according to the present embodiment, a memory area is provided which stores setting information (six types including no automatic off, 15 minutes, 30 minutes, 60 minutes, 120 minutes, and 240 minutes) of "automatic power source off (LAN/USB connected)" and "automatic power source off (LAN/USB unconnected)" and the like. As respective initial values, "no automatic off" is saved in "automatic power source off (LAN/USB connected)", and "15 minutes" is saved in "automatic power source off (LAN/USB unconnected)". In this manner, according to the present embodiment, by setting a predetermined time period as the initial value of the setting time period of "automatic power source off (LAN/USB unconnected)", it is also possible to comply with the regulation that the power source is to be automatically turned off within a specified time period in a standalone state.

An image memory 104 is constituted by a dynamic random access memory (DRAM) or the like and accumulates image data. In addition, a partial area is secured as a work area for executing software processing. A data conversion unit 105 performs an analysis of a page description language (PDL) or the like, computer graphics (CG) rasterization or the like of character data, and conversion of image data.

A reading control unit 106 causes a reading unit 107 to optically read an original by a contact image sensor (CIS) and applies various types of image processing such as binarization processing and half tone processing to image signals converted into electric image data via an image processing control unit which is not illustrated in the drawing to output high resolution image data.

It is noted that the reading control unit 106 and the reading unit 107 may adopt either one of the following two control schemes. A first scheme is a sheet reading control scheme in which while an original is conveyed, reading is performed by the stationary CIS image sensor. A second scheme is a book reading control scheme in which an original that is stationary on a platen glass is scanned by the moving CIS image sensor. The display operation unit 108 is constituted by keys such as numeral input keys, mode setting keys, a determination key, and a cancel key and a display unit such as a light emitting diode (LED) or a liquid crystal display (LCD), so that the user can activate various functions as a composite machine and conduct various types of settings. In addition, the display operation unit 108 can display an operation unit and a screen for conducting settings of "automatic power source off (LAN/USB connected)" and "automatic power source off (LAN/USB unconnected)".

A FAX communication control unit 109 is connected to a telephone line and performs transmission and reception of a facsimile (FAX) image with a FAX machine which is not illustrated in the drawing. A resolution conversion processing unit 110 performs resolution conversion control of input image data and output image data and enlargement and reduction processing of the image data. An encoding and decoding processing unit 111 mutually performs encoding and decoding processing or enlargement and reduction processing of the image data (uncompressed, MH, MR, MMR, JBIG, JPEG, or the like) dealt with in the MFP 100. A recording control unit 112 applies, to the image data to be printed, various types of image processing such as smoothing processing, record density correction processing, and color correction processing via an image processing control unit which is not illustrated in the drawing, and the image data is converted to the high resolution image data and output to a recording unit 113. The recording unit 113 is a recording unit constituted by a laser beam printer, an ink jet printer, or the like and prints color image data or monochrome image data generated by the recording control unit 112 on a print member fed from a sheet feed slot 114. The sheet feed slot 114 is constituted by one or more sheet feed slots such as an automatic sheet feeder (ASF) or a sheet feeding cassette, and sheets of a different sheet size can be inserted into each sheet feed slot. A USB function control unit 115 is configured to perform communication control of a USB interface and perform protocol control in accordance with USB communication standards. Data from a USB function control task executed by the CPU 101 is converted into packets to perform USB packet transmission to a personal computer (PC) which is not illustrated in the drawing, and conversely, USB packets from the PC are converted into data to be transmitted to the CPU 101. A communication unit 116 communicates with a terminal on a network system (network where communication in accordance with TCP/IP can be performed) by way of wireless communication or wired LAN. The communication unit 116 is configured to be able to perform data (packet) communication with an access point (AP) or PC which is not illustrated in the drawing in a network system that is, for example, compliant with IEEE802.11 series.

An automatic power source off control unit 117 performs control to set "automatic power source off (LAN/USB connected)" and "automatic power source off (LAN/USB unconnected)" and set an appropriate automatic power source off time period based on the state of the MFP 100. In addition, the automatic power source off control unit 117 counts a time period in which the MFP 100 is not operated, and in a case where the set automatic power source off time period has reached, performs control such that processing of an automatic power source off function is executed. The above-described components 101 to 106 and 108 to 117 are mutually connected via a CPU bus 121 managed by the CPU 101.

According to the present embodiment, items for respectively setting the two automatic power source off settings including "automatic power source off (LAN/USB connected)" and "automatic power source off (LAN/USB unconnected)" are displayed on a setting screen (energy saving setting screen) of the display operation unit 108. Then, the user can conduct the two automatic power source off settings including "automatic power source off (LAN/USB connected)" and "automatic power source off (LAN/USB unconnected)" via the display operation unit 108. Then, the setting information of the two automatic power source off settings including "automatic power source off (LAN/USB connected)" and "automatic power source off (LAN/USB unconnected)" set by user instructions is stored in the RAM 103. It is noted that according to the present embodiment, explanations will be provided where the standalone state refers to, for example, a state in which the electronic device can be used in an independent state without being connected to another device or a network (hereinafter, also referred to as a first state), and on the other hand, a non-standalone state refers to, for example, a state in which the electronic device can be used in a state of being connected to another device or a network (hereinafter, also referred to as a second state). In addition, explanations will be provided where as a power source off state, instead of a hard off state in which a power cord is pulled out of a power plug and disconnected from a commercially available power source (state in which power is not supplied to each component), a so-called soft off state (state in which power is supplied to at least some components) with smaller power consumption than that in a normal activation state is adopted.

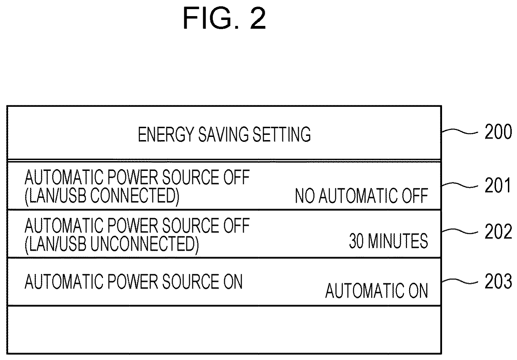

Fig. 2 illustrates an example of a setting screen for conducting two automatic power source off settings in the display operation unit 108 of the MFP 100 in the present embodiment. By sequentially selecting menus of the setting menu, the main unit setting, and the energy saving setting, the top screen which is not illustrated in the drawing and is displayed on the display operation unit 108 after the power source of the MFP 100 is turned on transits to an energy saving setting screen 200. On the energy saving setting screen 200, by displaying three settings of "automatic power source off (LAN/USB connected)" 201, "automatic power source off (LAN/USB unconnected)" 202, and "automatic power source on" 203, respective settings can be performed. In addition, current setting values of the three setting items are stored in the RAM 103 and displayed by being obtained from the RAM 103 before the energy saving setting screen 200 is displayed.

In the "automatic power source off (LAN/USB connected)" 201, the automatic power source off time period when the MFP 100 is in the connection state to the LAN or the USB (non-standalone state) can be changed. As the current value, "no automatic off" obtained from the RAM 103 is displayed, and when this part is selected, the six types of options including "no automatic off, 15 minutes, 30 minutes, 60 minutes, 120 minutes, and 240 minutes" are displayed, and the setting can be changed. Then, the changed value is stored in the RAM 103. In addition, in the "automatic power source off (LAN/USB unconnected)" 202, the automatic power source off time period when the MFP 100 is in the non-connection state to the LAN or the USB (standalone state) can be changed. As the current value, "30 minutes" obtained from the RAM 103 is displayed, and when this part is selected, similarly as in the "automatic power source off (LAN/USB connected)" 201, the six types of options are displayed, and the setting can be changed. The changed value is stored in the RAM 103.

In addition, in the "automatic power source on" 203, the automatic power source on setting can be changed. As the current value, "automatic on" obtained from the RAM 103 is displayed, and when this part is selected, an option of "no automatic on" is displayed, and the setting can be changed. The changed value is stored in the RAM 103. When "automatic on" is set in "automatic power source on", an automatic power source on function is validated. In a case where a state is established in which the power source is turned off, when part of a job is received from the outside, the MFP 100 is put into a state in which the power source is turned on to execute the job. For example, when a scan job is received from the PC which is not illustrated in the drawing via the USB function control unit 115 or when a print job is received from a smartphone which is not illustrated in the drawing via the communication unit 116, the MFP 100 turns on the power source to execute scanning and printing.

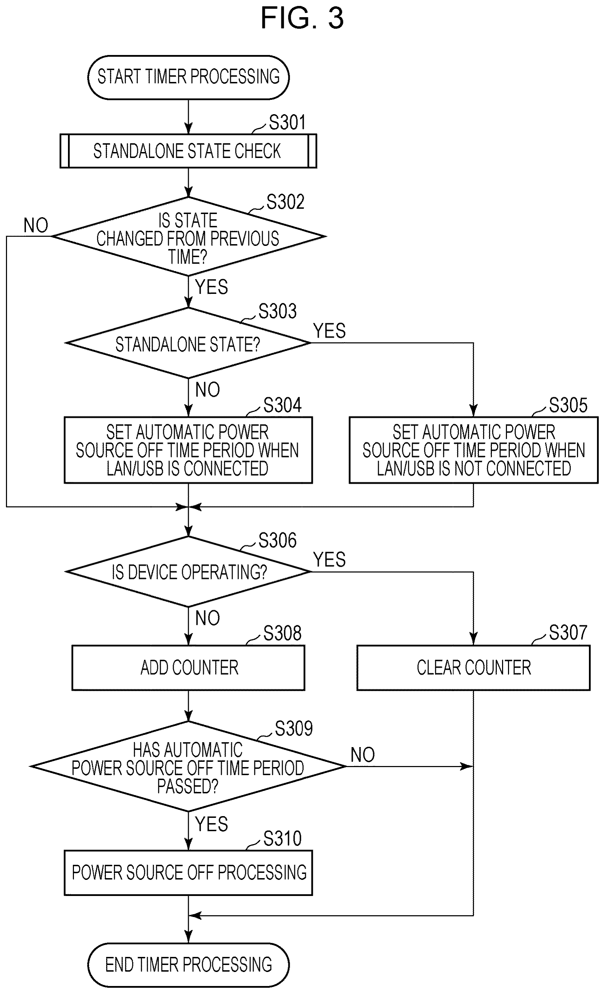

Fig. 3 is a flowchart illustrating a flow of an automatic power source off operation of the MFP 100 in the present embodiment. When the power source of the MFP 100 is turned on, the automatic power source off control unit 117 activates a timer at regular cycles. When timer processing which is activated at regular cycles is started, the present flowchart is started. The present flowchart is implemented when the CPU 101 reads out a program for implementing each control module stored in the ROM 102 onto the RAM 103 and executes the program. It is noted that a part or all of functions among steps in Fig. 3 may be implemented by hardware such as an application specific integrated circuit (ASIC) or an electronic circuit. In addition, a symbol "S" in a description of each processing means a step in the flowchart diagram (hereinafter, the same also applies to the flowchart diagram in the present specification).

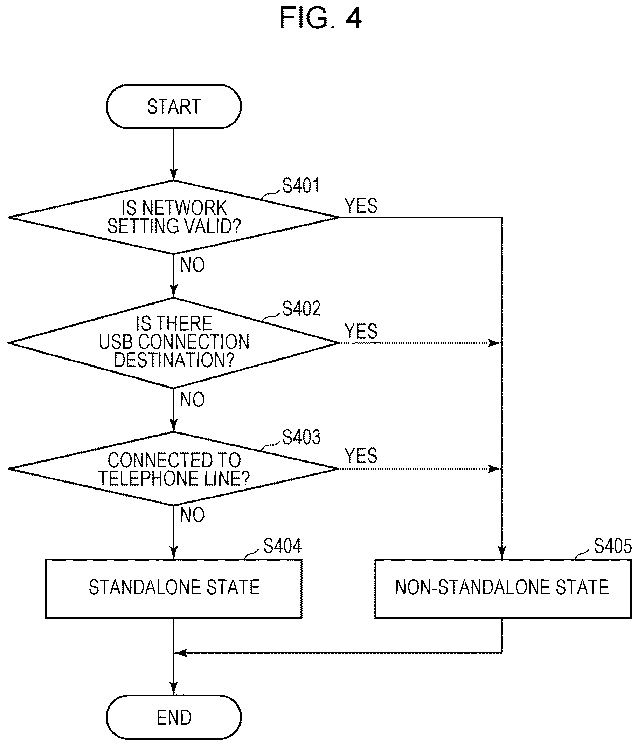

First, in S301, the CPU 101 checks whether the MFP 100 is in the standalone state or the non-standalone state. This check processing will be described below with reference to Fig. 4.

Subsequently, in S302, the CPU 101 determines whether or not a result of the check in S301 is changed from the previous time. When it is determined that the result is not changed, the processing proceeds to S306, and when it is determined that the result is changed, the processing proceeds to S303. In S303, the CPU 101 determines whether or not a result of the check in S301 is the standalone state. In a case where the MFP 100 is the non-standalone state, the processing proceeds to S304, and a time period stored as the setting information of "automatic power source off (LAN/USB connected)" of the RAM 103 is set in the automatic power source off time period. On the other hand, in a case where the MFP 100 is in the standalone state, the processing proceeds to S305, and a time period stored as the setting information of "automatic power source off (LAN/USB unconnected)" of the RAM 103 is set in the automatic power source off time period.

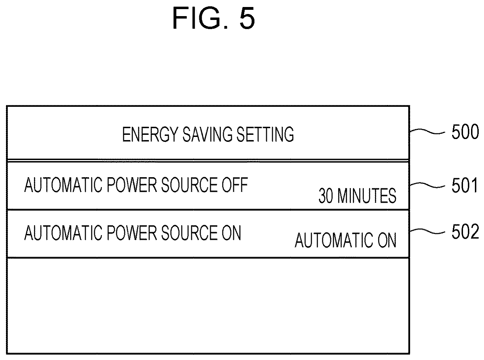

Herein, the automatic power source off time periods which are set in S304 and S305 and stored in the RAM 103 can be set by the user using the energy saving setting screen 200 as described with reference to Fig. 2 and an energy saving setting screen 500 of Fig. 5 which will be described below. In addition, in a case where the user has not set the automatic power source off time period, an automatic power source off time period as an initial value registered in the RAM 103 is set. In addition, in S304 and S305, a count to measure a non-operative time period which will be described below may be cleared.

Subsequently, in S306, the CPU 101 determines whether or not the MFP 100 is operating. For the determination on whether the MFP 100 is operating, for example, a condition where the job such as printing or scanning is not being executed, a condition where the user is not operating the display operation unit 108, a condition where various errors have not occurred, and the like are determined, and when all the conditions are met, "not operating" is determined. It is however noted that this is an example of a determination method on whether or not the MFP 100 is operating, and the determination may be performed further based on other conditions, or it may be determined that the MFP 100 is not operating when at least some of the above-described conditions are met. For example, whether the automatic power source off time period set in S304 or S305 is set as "no automatic off" may be added to the determination conditions on whether or not the MFP 100 is operating. In a case where the automatic power source off time period is set as "no automatic off", it can be determined that the MFP 100 is regularly operating because automatic turning-off of the power source is not implemented. When it is determined that the MFP 100 is operating, the processing proceeds to S307, and when it is determined that the MFP 100 is not operating, the processing proceeds to S308.

In S307, the CPU 101 clears the counter to measure the non-operation time period to end the timer processing. On the other hand, in S308, the CPU 101 adds the counter to measure the non-operation time period. Subsequently, in S309, the CPU 101 compares the automatic power source off time period set in S304 or S305 with the counter to measure the non-operation time period added in S308 and determines whether or not the set automatic power source off time period has passed. In a case where the automatic power source off time period has not passed, the timer processing is ended, and when the automatic power source off time period has passed, the processing proceeds to S310. For example, when the option of 30 minutes is set as the setting information of "automatic power source off (LAN/USB unconnected)" in the RAM 103, and when it is determined in S301 that the MFP 100 is in the standalone state, and the option of 30 minutes is set the automatic power source off time period in S305. In this case, in S309, the CPU 101 determines whether or not the value of the counter has passed 30 minutes. Subsequently, in S310, the CPU 101 performs the power source off processing of the MFP 100 and thereafter ends the timer processing. The power source off processing in S310 is the same processing as the processing performed when the user has pressed a power source button which is not illustrated in the drawing and is located on the display operation unit 108, and the power source of the MFP 100 is turned off.

Fig. 4 is a flowchart of determining whether the MFP 100 is in a standalone state or a non-standalone state in the present embodiment. In S401, the CPU 101 determines whether or not a network setting of the MFP 100 is valid. The network setting includes three settings of wired LAN, Wi-Fi, and wireless direct. When at least one of the three settings is set to be valid, it is determined that the network setting of the MFP 100 is valid, and the processing proceeds to S405. On the other hand, when all of the three settings of wired LAN, Wi-Fi, and wireless direct are set to be invalid, the processing proceeds to S402. Subsequently, in S402, it is determined whether or not the MFP 100 is connected to the PC which is not illustrated in the drawing by a USB by using the USB function control unit 115. As a determination method on whether or not the USB is connected, it is determined whether or not a VBUS of USB is in an on state. When the MFP 100 is physically connected to the PC which is not illustrated in the drawing by a USB cable and the power source of the PC is turned on, the VBUS is put into the on state, and in a case where the power source of the PC is not turned on, the VBUS is put into an off state. When it is determined that the VBUS of the USB is in the on state and connection to the USB is established, the processing proceeds to S405. On the other hand, when it is determined that the VBUS of the USB is in the off state and connection to the USB is not established, the processing proceeds to S403. Subsequently, in S403, the CPU 101 determines whether or not the FAX communication control unit of the MFP 100 is connected to the telephone line. In a case where the FAX communication control unit is connected to the telephone line, the processing proceeds to S405. On the other hand, in a case where the FAX communication control unit is not connected to the telephone line, the processing proceeds to S404. In S404, the CPU 101 determines that the state of the MFP 100 is the standalone state and ends the processing. In S405, the CPU 101 determines that the state of the MFP 100 is in the non-standalone state and ends the processing.

As described above, according to the present embodiment, the setting items for respectively setting the two automatic power source off settings including "automatic power source off (LAN/USB connected)" and "automatic power source off (LAN/USB unconnected)" are displayed on the setting screen (energy saving setting screen) of the display operation unit 108. Then, the user can conduct the two automatic power source off settings including "automatic power source off (LAN/USB connected)" (non-standalone state) and "automatic power source off (LAN/USB unconnected)" (standalone state) via the display operation unit 108. With this configuration, it becomes possible to improve the convenience of the user. In addition, the automatic power source off setting according to the state of the electronic device (the standalone state/the non-standalone state) can be implemented, and it becomes possible to efficiently reduce the power consumption.

It is noted that according to the present embodiment, an example has been illustrated in which "automatic power source off (LAN/USB connected)" or "automatic power source off (LAN/USB unconnected)" is changed from the setting screen (Fig. 2) displayed on the display operation unit 108 but is not limited to this. A configuration may be adopted in which by using the USB function control unit 115 or the communication unit 116, communication with an application or a driver of the PC which is not illustrated in the drawing is performed, so that the setting can be changed. In addition, a configuration may be adopted in which communication with a web server unit which is not illustrated in the drawing of the MFP 100 is performed from a browser of the PC which is not illustrated in the drawing, so that the setting can be changed.

In addition, according to the present embodiment, a mode has been described as an example in which the setting of the automatic power source off time period in S301 to S305 is performed in the timer processing of Fig. 3 but is not limited to this. By using a change in the standalone state as a trigger, the automatic power source off time period may be set again, or by using a change in the setting by the user from the setting screen illustrated in Fig. 2 as a trigger, the automatic power source off time period may be set again.

In addition, according to the present embodiment, in the determination processing of the standalone state illustrated in Fig. 4, the description has been provided on the determination on whether or not the network setting is set to be valid, but the configuration is not limited to this. Instead of whether or not the network setting is valid, "whether connection is actually made to a network" or "whether communication is performed with the PC which is not illustrated in the drawing or the like via a network" may be determined. In addition, with regard to the USB too, the description has been provided on the determination on whether or not connection to the PC which is not illustrated in the drawing is established, but the configuration is not limited to this. In the MFP 100, whether or not USB connection is set to be valid may be determined.

### Second Embodiment

Next, a second embodiment will be described. According to a first embodiment, the setting items for respectively setting the two automatic power source off settings including "automatic power source off (LAN/USB connected)" and "automatic power source off (LAN/USB unconnected)" are displayed on the setting screen (energy saving setting screen) of the display operation unit 108. With this configuration, the two automatic power source off settings including "automatic power source off (LAN/USB connected)" and "automatic power source off (LAN/USB unconnected)" can be conducted. According to the second embodiment, a configuration in which the two automatic power source off settings including "automatic power source off (LAN/USB connected)" and "automatic power source off (LAN/USB unconnected)" are conducted by a single setting item will be described. It is noted that the same reference sign is allocated to the component already described in the first embodiment, and the description is omitted.

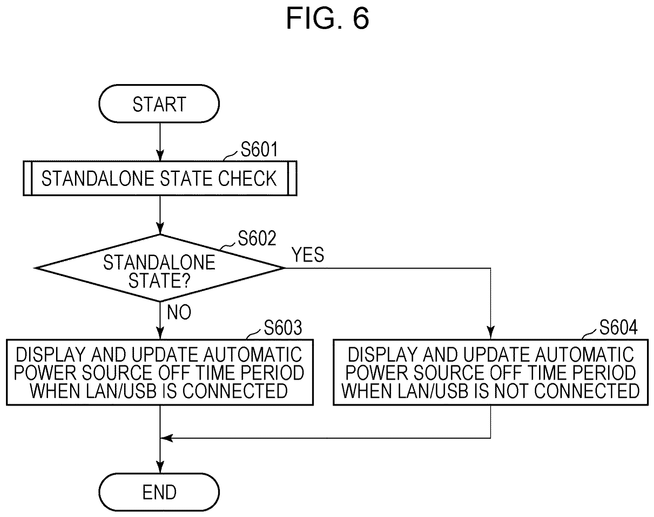

Fig. 5 illustrates an example of the setting screen displayed on the display operation unit 108 of the MFP 100 in the present embodiment. Two setting items including "automatic power source off" 501 and "automatic power source on" 502 are displayed on the energy saving setting screen 500 of the present embodiment, and respective settings can be instructed and changed by the user. According to the present embodiment, the two automatic power source off settings including "automatic power source off (LAN/USB connected)" and "automatic power source off (LAN/USB unconnected)" can be conducted by a single setting item of "automatic power source off" 501. Three current setting values (setting information) including "automatic power source off (LAN/USB connected)", "automatic power source off (LAN/USB unconnected)", and "automatic power source on" are stored in the RAM 103, and the display is performed by obtaining the setting information from the RAM 103 before the energy saving setting screen 500 is displayed. At this time, which one of the values of "automatic power source off (LAN/USB connected)" and "automatic power source off (LAN/USB unconnected)" is to be displayed in the "automatic power source off" 501 to enable the setting will be described below with reference to Fig. 6.

In the "automatic power source off" 501 illustrated in Fig. 5, the option of "30 minutes" obtained from the RAM 103 is displayed as the current value. When this part is selected, the six types of options including "no automatic off, 15 minutes, 30 minutes, 60 minutes, 120 minutes, and 240 minutes" are displayed, and the setting can be changed. The changed value is stored in the RAM 103. In addition, with regard to the "automatic power source on" 502, the same applies to the "automatic power source on" 203 according to the first embodiment, and the description thereof is omitted.

Fig. 6 is a flowchart illustrating a flow of automatic power source off setting in a case where the MFP 100 displays a single setting item of an automatic power source off setting on the display operation unit 108 in the present embodiment. Since the processing in S601 and the processing in S602 are respectively similar to the processing in S301 and the processing in S303, descriptions thereof are omitted.

In S603, since the current state of the MFP 100 is not the standalone state, the CPU 101 obtains a value stored in "automatic power source off (LAN/USB connected)" of the RAM 103 to be displayed as the current value in the "automatic power source off" 501. In a case where the user makes a change to the current value, "automatic power source off (LAN/USB connected)" of the RAM 103 is updated to any of the values after the change including "no automatic off, 15 minutes, 30 minutes, 60 minutes, 120 minutes, and 240 minutes".

On the other hand, in S604, since the current state of the MFP 100 is the standalone state, the CPU 101 obtains a value stored in "automatic power source off (LAN/USB unconnected)" of the RAM 103 to be displayed as the current value in the "automatic power source off" 501. In addition, when the user makes a change to the current value, "automatic power source off (LAN/USB unconnected)" of the RAM 103 is updated to any of the values after the change including "no automatic off, 15 minutes, 30 minutes, 60 minutes, 120 minutes, and 240 minutes".

As subsequent processing, in the present embodiment too, the processing in S306 and thereafter in Fig. 3 is executed. However, as already described in the first embodiment, the subsequent processing is omitted from the drawing, and the description thereof is also omitted.

As described above, according to the present embodiment, a single setting item is displayed on the setting screen (energy saving setting screen) of the display operation unit 108, so that the automatic power source off setting in the current state of the MFP 100 can be conducted. In other words, with only the single setting item, when the state of the MFP 100 is put into the standalone state, standalone state automatic power source off setting can be conducted, and when the state of the MFP 100 is put into the non-standalone state, non-standalone state automatic power source off setting can be conducted. According to the present embodiment, the two automatic power source off settings including "automatic power source off (LAN/USB connected)" (non-standalone state) and "automatic power source off (LAN/USB unconnected)" (standalone state) can be conducted via the single setting item. With this configuration, it becomes possible to improve the convenience of the user. In addition, the automatic power source off setting according to the state of the electronic device (the standalone state/the non-standalone state) can be implemented, and it becomes possible to efficiently reduce the power consumption.

It is noted that according to the present embodiment, the change of "automatic power source off" by using the display operation unit 108 from the setting screen illustrated in Fig. 5 has been described but is not limited to this. A configuration may be adopted in which by using the USB function control unit 115 or the communication unit 116, communication with an application or a driver of the PC which is not illustrated in the drawing is performed, so that the setting can be changed. In addition, a configuration may be adopted in which communication with a web server unit which is not illustrated in the drawing of the MFP 100 is performed from a browser of the PC which is not illustrated in the drawing, so that the setting can be changed.

### Other Embodiments

According to the first embodiment, on the setting screen (Fig. 2) displayed on the display operation unit 108, it is possible to set "automatic power source off (LAN/USB connected)" and "automatic power source off (LAN/USB unconnected)". However, it is difficult for the user to understand which one of the automatic power source off settings the MFP 100 is currently operating in.

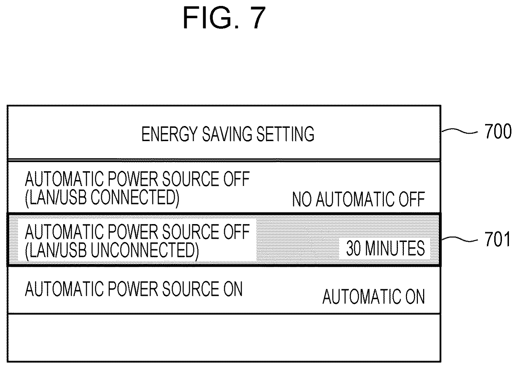

Fig. 7 illustrates a modification example of the setting screen for conducting the automatic power source off setting (graying out an invalid setting). In the example of Fig. 7, two setting items of the automatic power source off setting are displayed on the setting screen of the display operation unit 108, and the currently invalid automatic power source off setting is not to be implemented. That is, on an energy saving setting screen 700, it is determined whether or not the state is the standalone state to display the screen, and the currently invalid automatic power source off setting is grayed out. In Fig. 7, the example is illustrated in which as a result of the determination on whether or not the state is the standalone state, since the state is the non-standalone state, "automatic power source off (LAN/USB unconnected)" 701 is grayed out, and even when this part is selected, the setting change is not to be accepted (setting is invalid). By providing such an energy saving setting screen, it becomes possible for the user to easily understand which one of the automatic power source off settings the MFP 100 is currently operating in.

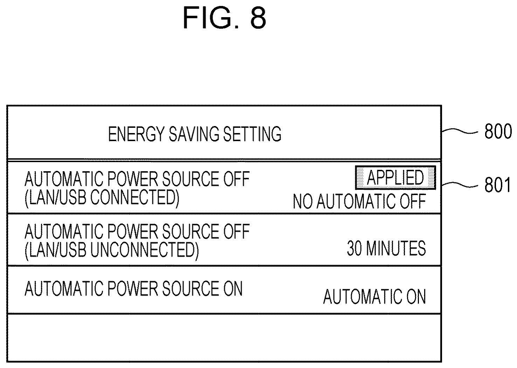

In addition, Fig. 8 illustrates a modification example of the setting screen for conducting the automatic power source off setting (adding information indicating a valid setting). In the example of Fig. 8, two setting items of the automatic power source off setting are displayed on the display operation unit 108, and the currently valid automatic power source off setting is made clear. That is, on an energy saving setting screen 800, it is determined whether or not the state is the standalone state to display the screen, information to make the currently valid automatic power source off setting clear to the user is added on a setting item of the automatic power source off setting. In Fig. 8, the example is illustrated in which as a result of the determination on whether or not the state is the standalone state, since the state is the non-standalone state, display (information) of "applied" 801 is added to make it clear that "automatic power source off (LAN/USB connected)" is valid. By providing such an energy saving setting screen, it becomes possible for the user to easily understand which one of the automatic power source off settings the MFP 100 is currently operating in.

According to the aspect of the present disclosure, it becomes possible to improve the convenience of the user.

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like. While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

## Claims

1. An image forming apparatus (100) comprising:
a first setting unit (101) configured to set, in a predetermined state in which reception of data via a local area network is not performed, a first setting related to a function of automatically turning off a power source of the image forming apparatus (100); and
a second setting unit (101) configured to set, in a state in which data is received via a local area network, a second setting related to the function.

2. The image forming apparatus (100) according to claim 1, further comprising:
a control unit (101) configured to control, in the predetermined state, execution of the function based on the first setting.

3. The image forming apparatus (100) according to claim 1 or 2, wherein the predetermined state is a state in which an external apparatus is not connected by a universal serial bus.

4. The image forming apparatus (100) according to claim 3, wherein the predetermined state is a state in which connection to a telephone line is not established.

5. The image forming apparatus (100) according to any one of claims 1 to 4, wherein the first setting is a setting related to a time period in which the function is executed.

6. The image forming apparatus (100) according to claim 5, wherein the second setting is a setting related to a time period in which the function is executed.

7. The image forming apparatus (100) according to any one of claims 1 to 6, the image forming apparatus further comprising:
a determination unit (101) configured to determine, based on a setting on whether or not data is received via at least a local area network, whether the predetermined state is established.

8. The image forming apparatus (100) according to claim 1, wherein the predetermined state is a state in which the image forming apparatus (100) operates in a standalone manner, and the state in which the data is received via the local area network is a state in which the image forming apparatus (100) operates in a non-standalone manner.

9. The image forming apparatus (100) according to claim 1, wherein the first setting is a setting of a time period until the power source of the image forming apparatus (100) is automatically turned off since it is determined that the image forming apparatus (100) is in a non-operative state in the predetermined state, and the second setting is a setting of a time period until the power source of the image forming apparatus (100) is turned off since it is determined that the image forming apparatus (100) is in a non-operative state in the state in which the data is received via the local area network.

10. The image forming apparatus (100) according to claim 1, wherein the non-operative state of the image forming apparatus (100) is a state in which at least the image forming apparatus (100) does not execute a print job.

11. The image forming apparatus (100) according to claim 10, wherein the non-operative state of the image forming apparatus (100) is a state in which at least the image forming apparatus (100) is not operated by a user.

12. The image forming apparatus (100) according to claim 1, further comprising:
a printing unit (113) configured to perform print processing based on image data received via the local area network.

13. The image forming apparatus (100) according to claim 1, further comprising:
a display control unit (101) configured to cause a display unit (108) to display whether the image forming apparatus (100) operates according to the first setting or the second setting.

14. A control method of an image forming apparatus (100), comprising:
accepting, in a predetermined state in which reception of data via a local area network is not performed, a first setting related to a function of automatically turning off a power source of the image forming apparatus (100); and
accepting, in a state in which data is received via a local area network, a second setting related to the function.

15. A computer program that when executed by a computer, causes the computer to perform the method according to claim 14.
